(19) Europäisches Patentamt / European Patent Office / Office européen des brevets

(11) **EP 3 733 328 B1**

(12) **EUROPEAN PATENT SPECIFICATION**

(45) Date of publication and mention
of the grant of the patent:
**22.04.2026 Bulletin 2026/17**

(21) Application number: **18906154.2**

(22) Date of filing: **21.12.2018**

(51) International Patent Classification (IPC):
**B23B 1/00** *(2006.01)*   **B23Q 5/22** *(2006.01)*
**B23Q 15/00** *(2006.01)*   **G05B 19/4093** *(2006.01)*
**B23Q 15/013** *(2006.01)*   **G05B 19/18** *(2006.01)*

(52) Cooperative Patent Classification (CPC):
**B23Q 15/013; B23B 25/02; B23Q 5/225;**
**B23Q 11/123; G05B 19/18; G05B 19/4093;**
B23B 2270/10; B23B 2270/54; G05B 2219/45136;
Y02P 90/02

(86) International application number:
**PCT/JP2018/047193**

(87) International publication number:
**WO 2019/159533 (22.08.2019 Gazette 2019/34)**

(54) **LATHE**

DREHBANK

TOUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.02.2018 JP 2018024693**

(43) Date of publication of application:
**04.11.2020 Bulletin 2020/45**

(73) Proprietor: **Star Micronics Co., Ltd.
Shizuoka-shi, Shizuoka 422-8654 (JP)**

(72) Inventor: **KAKU Norio
Shizuoka-shi, Shizuoka 422-8654 (JP)**

(74) Representative: **Manitz Finsterwald
Patent- und Rechtsanwaltspartnerschaft mbB
Martin-Greif-Straße 1
80336 München (DE)**

(56) References cited:
**EP-A1- 3 124 174       EP-A1- 3 225 355
WO-A1-2015/146945    JP-A- S5 871 001
JP-U- 3 213 438           JP-U- 3 213 438
US-A1- 2017 108 846**

• **ABSOLUTE MACHINE TOOLS, INC.: "Quicktech
i-42 Ultimate 10-Axis Twin Spindle Lathe with
Dual B Axes", 20 April 2017 (2017-04-20),
XP054982166, Retrieved from the Internet
<URL:https://www.youtube.com/watch?
v=zqycoq8psNo> [retrieved on 20210823]**

**Description**

**TECHNICAL FIELD**

The present invention relates to a lathe provided with a headstock and a tool post.

BACKGROUND ART

A lathe according to the preamble of independent claims 1 and 2 is known from Patent Document 1. In a lathe, a guide like a bearing or a linear way is used in the headstock and the tool post. The guide includes many rolling elements arranged in a raceway groove. A lubricant is supplied between the rolling elements and the raceway groove.

Cut chips are produced from a workpiece rotatably held by a spindle and cut with a tool attached to the tool post. Longer chips would possibly influence on the cutting work. Patent Document 2 discloses a control apparatus for a machine tool that reciprocally applies small amplitude oscillations to the tool post in the moving direction thereof to sequentially segment the chips. The spindle is movable only in the Z-axis direction while the tool post is movable only in the X-axis and the Y-axis directions.

**PRIOR ART DOCUMENT**

**PATENT DOCUMENT**

Patent Document 1: JP 3 213438 U
Patent Document 2: WO 2015/146945 A1

TECHNICAL PROBLEM

An oil film of the lubricant supplied between the rolling elements and the raceway groove is likely broken by repeated reciprocal small amplitude oscillations. Such oil film damage would likely cause abrasions called fretting wear to the raceway groove and the rolling elements, resulting in a shortened life of the guide. Such problem resides in a variety of lathes.

It is therefore an objective of the invention to provide a lathe capable of elongating the life of a guide for use in cutting a workpiece.

**TECHNICAL SOLUTION**

The objective is respectively solved by a lathe comprising the features of the independent claims.

ADVANTAGEOUS EFFECTS

The invention provides a lathe capable of elongating the life of the guide for use in cutting the workpiece.

**BRIEF DESCRIPTION OF THE DRAWINGS**

FIG. 1 is a block diagram schematically showing a configuration of a lathe.
FIG. 2 is a block diagram schematically showing an electrical connection in the lathe.
FIG. 3 schematically shows an example of an operation of the headstock and the tool post in cutting the workpiece.
FIG. 4 schematically shows an example of a position of the headstock and the tool post in a vibration-cut mode.
FIG. 5 is a flow chart representing an example of a processing in the vibration-cut mode executed by a numerical control apparatus.
FIG. 6 schematically shows another example of an operation of the headstock and the tool post in cutting the workpiece.
FIG. 7 schematically shows an example of a position of the headstock and the tool post in another vibration-cut mode and a relative position thereof.
FIG. 8 schematically shows part of a bearing.

## MODE FOR INVENTION

Hereinafter, an embodiment of the present invention will be described.

(1) Summary of inventive technology:

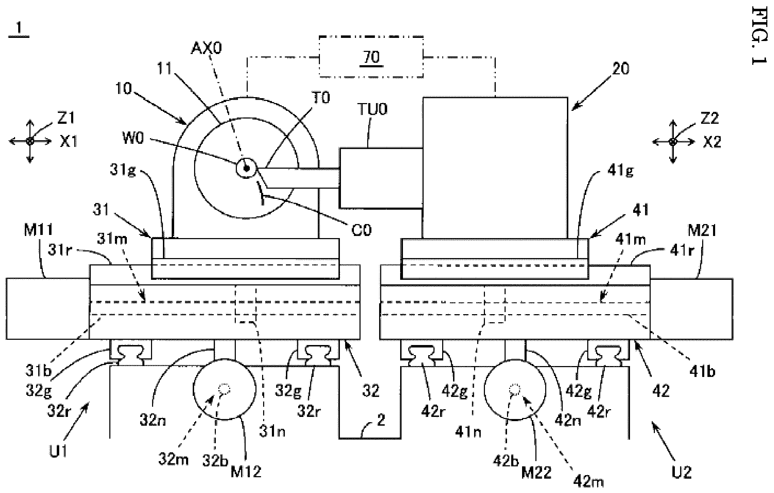

Technology of the invention will be described with reference to FIG. 1 to FIG. 8. The drawings only schematically show an example of the invention. They may have a mismatch to each other due to different maginification in each direction. Each element denoted by a symbol is only an example.

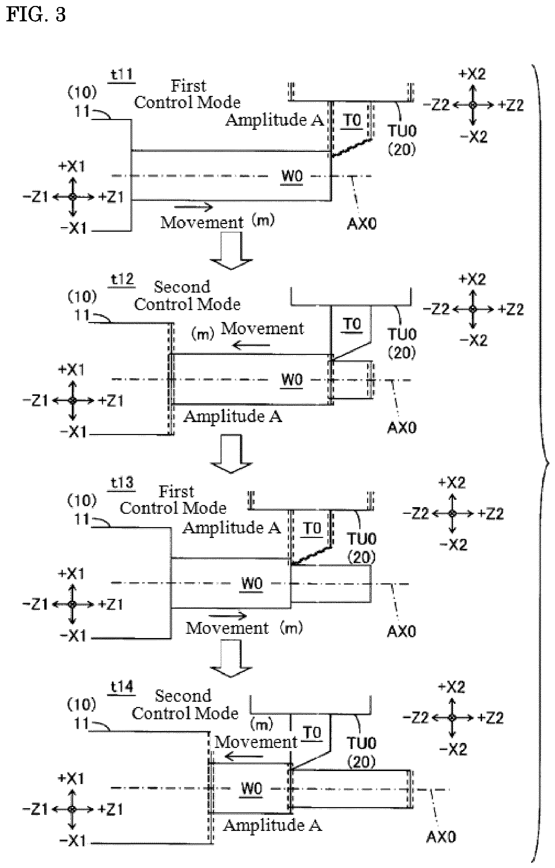

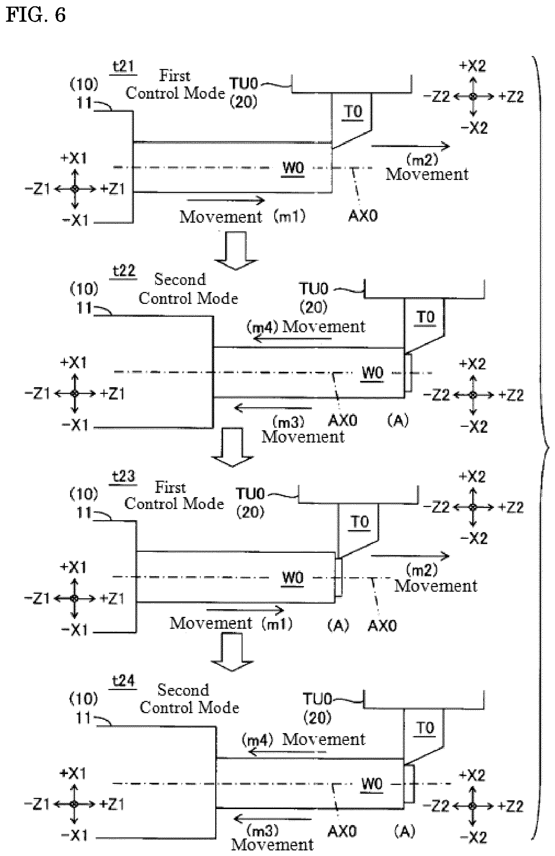

A lathe 1 of the invention comprises a headstock 10 which supports a spindle 11 holding a workpiece W10, a tool post 20 which holds a tool T0 cutting the workpiece WO, a first driving unit U1 which moves the headstock 10 in a driving direction of a predetermined orientation, a second driving unit U2 which moves the tool post 20 in the driving direction, and a control unit U3 which vibrates a relative positional relation between the headstock 10 and the tool post 20 in the driving direction when the headstock 10 and the tool post 20 are relatively moved in the driving direction to cut the workpiece WO. The driving direction may comprise the Z1-axis and the Z2-axis directions in FIG. 3 and FIG. 6 but not limited thereto. The driving direction may comprise the X1-axis and the X2-axis directions.

The headstock 10 and the tool post 20 are both movable in the driving direction. A relative positional relation between the headstock 10 and the tool post 20 is vibrated when they are moved in the driving direction to cut the workpiece. The invention prevents an oil film damage which would likely occur in the guide when only the tool post is vibrated. Accordingly, the embodiment provides a lathe capable of elongating the life of the guide for use in cutting the workpiece.

The spindle may comprise a front spindle and a back spindle if any. A tool unit having a plurality of tools may be attached to the tool post. The driving direction in cutting the workpiece may include a direction along the spindle axis (the Z-axis direction, for example) and a direction perpendicular to the spindle axis (the X-axis direction, for example). The driving direction may be a direction of an angle of greater than 0 degree and smaller than 90 degrees with respect to the spindle axis. The Z-axis direction may comprise the Z1-axis and the Z2-axis directions. The X-axis direction may comprise the X1-axis and the X2-axis directions. If something is vibrated, it shakes with repeated small movements back and forth in a predetermined direction.

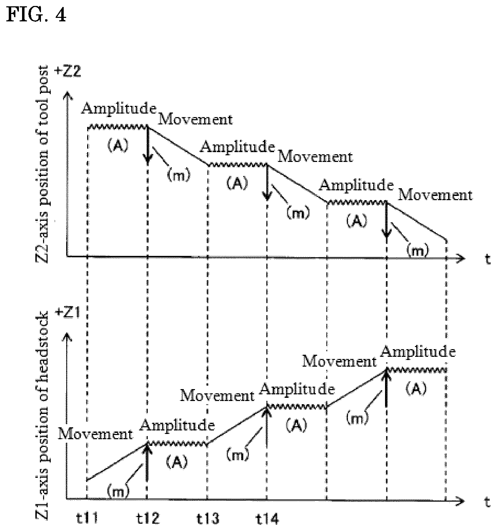

As shown in FIG. 3 and FIG. 4, according to a first aspect of the invention, the control unit 3 alternately executes a first control mode and a second control mode. In the first control mode, the headstock 10 is moved while the tool post 20 is vibrated in the driving direction. The lubricant supplied between the raceway groove and the rolling elements thereby spreads over the guide in the headstock 10. In the second control mode, the tool post 20 is moved while the headstock 10 is vibrated in the driving direction. The lubricant supplied between the raceway groove and the rolling elements thereby spreads over the guide in the tool post 20. An oil film damage is prevented since the first control mode and the second control mode are alternately executed. Accordingly, the embodiment provides a desired lathe capable of elongating the life of the guide for use in cutting the workpiece.

Such alternate execution of the first control mode and the second control mode may start from whichever.

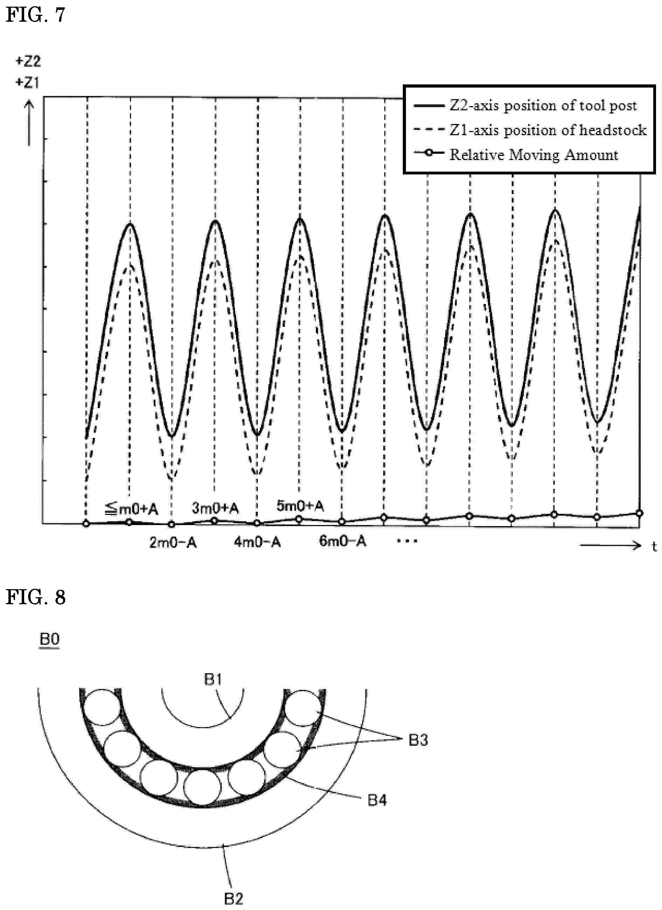

As shown in FIG. 6 and FIG. 7, according to a second aspect of the invention, the control unit 3 alternately executes another first control mode and another second control mode to vibrate the relative positional relation between the headstock 10 and the tool post 20 in the driving direction. **In** the first control mode, the headstock 10 and the tool post 20 are moved to the plus direction in the driving direction. The lubricant supplied between the raceway groove and the rolling elements thereby spreads over the guide in the headstock 10 and the tool post 20. **In** the second control mode, the headstock 10 and the tool post 20 are moved to the minus direction in the driving direction. The lubricant supplied between the raceway groove and the rolling elements thereby spreads over the guide in the headstock 10 and the tool post 20. An oil film damage is prevented since the first control mode and the second control mode are alternately executed. Accordingly, the embodiment provides a desired lathe capable of elongating the life of the guide for use in cutting the workpiece.

Such alternate execution of the first control mode and the second control mode may start from whichever.

(2) Hardware configuration of the lathe:

FIG. 1 schematically shows a configuration of an NC (numerical control) lathe of sliding headstock type. FIG. 1 is only a simplified example for explanation and the invention is not limited thereto. A positional relation between elements is only an example for explanation. The left and right direction may be replaced by the up and down direction or the front and back direction. The up and down direction may be replaced by the left and right direction or the front and back direction. The front and back direction may be replaced by the left and right direction or the up and down direction. The rotational direction may be inversed. If something is the same as something in direction or position, they may be the same or not the same within an error range.

The lathe 1 comprises the headstock 10 provided with the spindle 11 holding the workpiece WO, the tool post 20 which holds the tool T0 cutting the workpiece WO, a headstock driving unit which drives the headstock 10 in the X1-axis and the Z1-axis directions, a tool post driving unit which drives the tool post 20 in the X2-axis and the Z2-axis directions, and optionally an NC apparatus 70 including the control unit U3. The NC apparatus 70 may control the operation of the units including the headstock 10, the tool post 20, the headstock driving unit, and the tool post driving unit.

The headstock 10 may be movable in the Z1-axis direction extended along the spindle axis AX0 and in the X1-axis direction perpendicular to the Z1-axis direction. The NC apparatus 70 may position-control the headstock 10 in the X1-axis and the Z1-axis directions by the headstock driving unit including the first driving unit U1. The spindle 11 mounted on the headstock 10 may releasably hold the cylindrical bar workpiece WO inserted in the Z1-axis direction with a collet (not shown). The workpiece WO is thereby rotated on the spindle axis AX0 exended along the longitudinal direction thereof. The lathe may be provided with another headstock having a back spindle arranged opposite the spindle 11. The headstock of the invention may comprise the headstock on the back side.

The tool post 20 which holds one or more tools T0 cutting the workpiece WO may be movable in the X2-axis direction extended along the X1-axis direction and the Z2-axis direction extended along the Z1-axis direction. The NC apparatus 70 may position-control the tool post 20 in the X2-axis and the Z2-axis directions by the tool post driving unit including the second driving unit U2. As shown in FIG. 1, a tool unit TU0 having the tool T0 may be detachably attached to the tool post 20. The tool T0 held by the tool unit TU0 may be thereby held by the tool post 20. Two or more tool units may be attached to the tool post 20. One or more undetachable tools may be attached to the tool unit 20 besides the tool unit or instead thereof. The tool post may include a turret tool post and a gang tool most. The lathe may be provided with several kinds of tool posts.

The X1-axis, X2-axis, Z1-axis, and Z2-axis directions each may be horizontal as shown in FIG. 1. They may be vertical or angled. The Z1-axis and Z2-axis directions may be horizontal while the X1-axis and X2-axis may be vertical. The X1-axis and X2-axis directions may be horizontal while the Z1-axis and Z2-axis may be vertical.

The headstock driving unit may comprise an X1-axis driving mechanism (including an X1-axis motor M11 and a feed mechanism 31m) for driving the headstock 10 in the X1-axis direction and further a Z1-axis driving mechanism (including an Z1-axis motor M12 and a feed mechanism 32m) for driving the headstock 10 in the Z1-axis direction. When the workpiece WO is vibration-cut in the Z-axis direction, the Z-axis direction may correspond to the driving direction of a predetermined orientation. The Z1-axis driving mechanism may correspond to the first driving unit U1. When the workpiece WO is vibration-cut in the X-axis direction, the X-axis direction may correspond to the driving direction of a predetermined orientation. The X1-axis driving mechanism may correspond to the first driving unit U1.

The X1-axis motor M11 of the X1-axis driving mechanism may move an X1-axis slide bed 31, on which the headstock 10 is mounted, in the X1-axis direction. The X1-axis slide bed 31 may have a pair of guide menbers 31g and a nut 31n engaged with a ball screw 31b whose longitudinal direction is along the X1-axis direction. The guide members 31g may be engaged with a pair of rails 31r in a slidable manner in the X1-axis direction. The pair of rails 31r may be mounted on a Z1-axis slide bed 32 described later. The ball screw 31b and the nut 31n may constitute the feed mechanism 31m for reciprocaly moving the X1-axis slide bed 31 and the headstock 10 in the X1-axis direction. The X1-axis motor M11 may be a servo motor mounted on the Z1-axis slide bed 32 to rotate the ball screw 31b upon receipt of a command from the NC apparatus 70. The feed mechanism 31m drives the the X1-axis slide bed 31 and the headstock 10 mounted thereon in the X1-axis direction.

The Z1-axis motor M12 of the Z1-axis driving mechanism may move the Z1-axis slide bed 32, on which the X1-axis driving mechanism is mounted, in the Z1-axis direction. The Z1-axis slide bed 32 may have a pair of guide menbers 32g and a nut 32n engaged with a ball screw 32b whose longitudinal direction is along the Z1-axis direction. The guide members 32g may be engaged with a pair of rails 32r in a slidable manner in the Z1-axis direction. The pair of rails 32r may be mounted on the bed 2. The ball screw 32b and the nut 32n may constitute the feed mechanism 32m for reciprocaly moving the Z1-axis slide bed 32 and the headstock 10 in the Z1-axis direction. The Z1-axis motor M12 may be a servo motor mounted on the bed 2 to rotate the ball screw 32b upon receipt of a command from the NC apparatus 70. The feed mechanism 32m drives the the Z1-axis slide bed 32 and the headstock 10 mounted thereon in the Z1-axis direction. As described, the X1-axis driving mechanism may be moved in the Z1-axis direction by the Z1-axis driving mechanism. Instead, the Z1-axis driving mechanism may be moved in the X1-axis direction by the X1-axis driving mechanism.

The tool post driving unit may comprise an X2-axis driving mechanism (including an X2-axis motor M21 and a feed mechanism 41m) for driving the tool post 20 in the X2-axis direction and further a Z2-axis driving mechanism (including an Z2-axis motor M22 and a feed mechanism 42m) for driving the tool post 20 in the Z2-axis direction. When the workpiece WO is vibration-cut in the Z-axis direction, the Z-axis direction may correspond to the driving direction of a predetermined orientation. The Z2-axis driving mechanism may correspond to the second driving unit U2. When the workpiece WO is vibration-cut in the X-axis direction, the X-axis direction may correspond to the driving direction of a predetermined orientation. The X2-axis driving mechanism may correspond to the second driving unit U2.

The X2-axis motor M21 of the X2-axis driving mechanism may move an X2-axis slide bed 41, on which the tool post 20 is mounted, in the X2-axis direction. The X2-axis slide bed 41 may have a pair of guide menbers 41g and a nut 41n engaged with a ball screw 41b whose longitudinal direction is along the X2-axis direction. The guide members 41g may be engaged with a pair of rails 41r in a slidable manner in the X2-axis direction. The pair of rails 41r may be mounted on a Z2-axis slide bed 42 described later. The ball screw 41b and the nut 41n may constitute the feed mechanism 41m for reciprocaly moving the X2-axis slide bed 41 and the tool post 20 in the X2-axis direction. The X2-axis motor M21 may be a servo motor mounted on the Z2-axis slide bed 42 to rotate the ball screw 41b upon receipt of a command from the NC apparatus 70. The feed mechanism 41m drives the the X2-axis slide bed 41 and the tool post 20 mounted thereon in the X2-axis direction.

The Z2-axis motor M22 of the Z2-axis driving mechanism may move the Z2-axis slide bed 42, on which the X2-axis driving mechanism is mounted, in the Z2-axis direction. The Z2-axis slide bed 42 may have a pair of guide members 42g and a nut 42n engaged with a ball screw 42b whose longitudinal direction is along the Z2-axis direction. The guide members 42g may be engaged with a pair of rails 42r in a slidable manner in the Z2-axis direction. The pair of rails 42r may be mounted on the bed 2. The ball screw 42b and the nut 42n may constitute the feed mechanism 42m for reciprocaly moving the Z2-axis slide bed 42 and the tool post 20 in the Z2-axis direction. The Z2-axis motor M22 may be a servo motor mounted on the bed 2 to rotate the ball screw 42b upon receipt of a command from the NC apparatus 70. The feed mechanism 42m drives the the Z2-axis slide bed 42 and the tool post 20 mounted thereon in the Z2-axis direction. As described above, the X2-axis driving mechanism may be moved in the Z2-zxis direction by the Z2-axis driving mechanism. Instead, the Z2-axis driving mechanism may be moved in the X2-axis direction by the X2-axis driving mechanism.

The headstock driving unit and the tool post driving unit each may comprise a guide facilitating smooth movement of the headstock 10 and the tool post 20. The guide may include a bearing rotatably supporting the ball screw 31b, 32b, 41b, and 42b. The guide may include a linear way for the combination of the rails 31r, 32r, 41r, and 42r and the guide members 31g, 32g, 41g, and 42g. The bearing and the linear way each may comprise a plurality of rolling elements such as balls and rollers.

FIG. 8 schematically shows part of a bearing B0. The bearing B0 may have a plurality of rolling elements B3 between an inner ring B1 and an outer ring B2. The rolling elements B3 may be balls in a ball bearing and rollers in a roller bearing. A lubricant is supplied between the inner ring B1 and the outer ring B2 to facilitate relative rotation thereof. An oil film B4 is thereby formed between the raceway groove and the rolling elements. The linear way (not shown) may have a plurality of rolling elements between the rail and the guide member. A lubricant is supplied between the rail and the guide member to facilitate relative movement thereof. An oil film B4 is thereby formed between the raceway groove and the rolling elements.

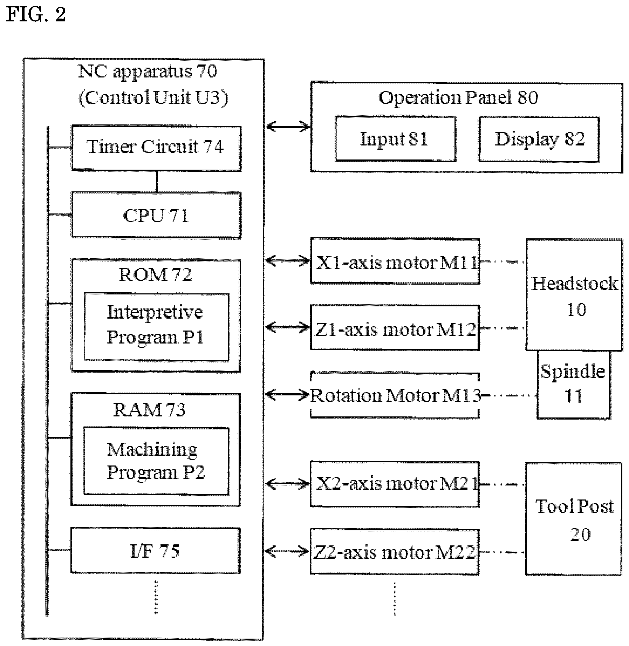

FIG. 2 schematically shows a configuration of an electrical circuit in the NC lathe 1. The NC apparatus 70 may be connected at least to an operation panel 80, the X1-axis motor M11, the Z1-axis motor M12, a rotation motor M13 for rotating the spindle 11, the X2-axis motor M21, and the Z2-axis motor M22. The NC apparatus 70 may comprise a CPU (Central Processing Unit) 71, a semiconductor memory such as a ROM (Read Only Memory) 72 and a RAM (Random Access Memory) 73, a timer circuit 74, and an I/F (Interface) 75. The I/F 75 collectively represents the I/F of the operation panel 80 and the servo motors M11, M12, M13, M21, and M22. The ROM 72 may store an interpretive program P1 to interpret and execute a machining program P2 written by a user. The RAM 73 may store the machining program P2. The machining program may be called an NC program. The CPU 71 may execute the interpretive program P1 stored in the ROM 72 using the RAM 73 as a working area. Whole or part of the functions available by the interpretive program P1 may be executed by ASIC (Application Specific Integrated Circuit) or something.

The operation panel 80 may comprise an input 81 and a display 82 for use as a user interface of the NC apparatus 70. The input 81 may comprise a botton and a touch panel through which an operator input is received. The display 82 may show, for example, an operator setting information and various information related to the NC lathe 1. The operator can store the machining program P2 in the RAM 73 by using the operation panel 80 or an external computer.

When the workpiece WO held by the spindle 11 is cut by the tool T0 of the tool post 20, the headstock 10 may be moved at a constant speed while the tool post 20 is kept stationary or the tool post 20 may be moved at a constant speed while the headstock 10 is kept stationary. Either operation, however, would produce longer chips from the workpiece WO, possibly causing an influence on the cutting work. The lathe 1 may be therefore provided with a vibration-cut mode in which a relative positional relation between the headstock 10 and the tool post 20 is vibrated to sequentially segment the chips.

If only the tool post 20 is vibrated while the workpiece is rotatably moving at a constant speed in the Z-axis direction or the X-axis direction, an oil film damage likely happens between the raceway groove and the rolling elements in the guide in the tool post 20 though the chips are successfully segmented. It is presumed referring to FIG. 8 that the rolling elements B3 in the vibration-cut mode are continuously pressed against a particular portion of the raceway groove (the outer ring B2) where the lubricant could not spread over. The lubricant between the rolling elements B3 and the raceway groove is therefore getting short. An oil film damage would cause fretting wear on the raceway groove or the rolling elements. It is desirable to avoid an oil film damage to prevent an early damage to the guide.

It is generally known that fretting wear occurs between two contacting surfaces experiencing oscillatory tangential displacement of small amplitude. Fretting wear often occurs when the surfaces are exposed to small amplitude oscillations of critical oscillation angle $2\beta c$ or less as calculated by general formula:
[Formula 1]

$$2\beta c \geqq \frac{360°}{Z} \cdot \frac{Dpw}{Dpw - Dw \cdot \cos\alpha} \cdots (1)$$

The "Z" is the number of rolling elements in a row. The "Dpw" is a PCD (Pitch Circle Diameter) of the rolling element. The "Dw" is the diameter of the rolling element. The "$\alpha$" is the contact angle. For the outer ring, the "Dpw-Dw·cos$\alpha$" as the denominator is replaced by "Dpw+Dw·cos$\alpha$".

In an angular bearing (Z=28, Dpw=120mm, Dw=12.7mm, $\alpha$=15°), the critical oscillation angle 2$\beta$c is 14.3° as calculated by formula (1). Fretting wear likely occurs when the surfaces are subject to oscillations of critical oscillation angle of 14.3° or less.

Fretting wear generally occurs when a new oil film is hardly formed between the raceway groove and the rolling elements and/or when wear debris is accumulated because of repeated small amplitude oscillations. It is therefore desired to avoid small amplitude oscillations applied to only the tool post 20. In this embodiment, the headstock 10 and the tool post 20 may be movable in the same driving direction. The headstock 10 and the tool post 20 may be relatively fed in the same driving direction to cut the workpiece. The relative positional relation between the headstock 10 and the tool post 20 may be vibrated. The controls executed by the NC apparatus 70 in the same driving direction may be referred to as a "superposition control".

Vibration-cut mode examples using superposition control may comprise:

(Vibration-cut mode 1) A first control mode and a second control mode are alternated. In the first mode, the headstock 10 is moved while the tool post 20 is vibrated in the driving direction. In the second mode, the tool post 20 is moved while the headstock 10 is vibrated in the same driving direction as the first mode.
(Vibration-cut mode 2) A first control mode and a second control mode are alternated. In the first mode, the headstock 10 and the tool post 20 are both moved to the plus direction in the driving direction. In the second mode, the headstock 10 and the tool post 20 are both moved to the minus direction in the same driving direction as the first mode. The relative positional relation between the headstock 10 and the tool post 20 is thereby vibrated in the same driving direction.

The lathe 1 may be provided with at least one of the vibration-cut modes. The NC apparatus 70 may selectively execute either to allow the operator to select either.

(3) Vibration-cut mode 1:

FIG. 3 schematically shows an operation of the headstock 10 and the tool post 20 in the vibration-cut mode 1. FIG. 4 schematically shows the position of the headstock 10 in the Z1-axis direction and the position of the tool post 20 in the Z2-axis direction in the vibration-cut mode 1. The +X1 direction represents the plus direction in the X1-axis direction. The -X1 direction represents the minus direction in the X1-axis direction. The +X2 direction represents the plus direction in the X2-axis direction. The -X2 direction represents the minus direction in the X2-axis direction. The +Z1 direction represents the plus direction in the Z1-axis direction. The -Z1 direction represents the minus direction in the Z1-axis direction. The +Z2 direction represents the plus direction in the Z2-axis direction. The -Z2 direction represents the minus direction in the Z2-axis direction. In FIG. 4, the horizontal axis represents the time (t) while the vertical axis represents the Z-axis position of the headstock 10 and the tool post 20.

In the first control mode where the tool post 20 is vibrated, the moving amount (m) of the headstock 10 in the Z1-axis direction may be greater than the amplitude (A) (A>0) of the tool post 20 in the Z2-axis direction by, for example, 1 (one) order (10 times) or more. The oscillation angle 2$\beta$ of the guide in the headstock 10 may be thereby greater than the critical oscillation angle 2$\beta$c. In the second control mode where the headstock 10 is vibrated, the moving amount (m) of the tool post 20 in the Z2-axis direction may be greater than the amplitude (A) of the headstock 10 in the Z1-axis direction by, for example, 1 (one) order (10 times) or more. The oscillation angle 2$\beta$ of the guide in the tool post 20 may be thereby greater than the critical oscillation angle 2$\beta$c.

In FIG. 3 and FIG. 4, the workpiece WO is cut to the -Z1 direction. The spindle 11 may have started rotating before the t11 timing by the rotation motor M13 under control of the NC apparatus 70.
The first control mode may be executed during a t11 to t12 period. The NC apparatus 70 may measure the t11 to t12 period by using the timer circuit 74. The headstock 10 may be moved to the +Z1 direction at a constant speed while the tool post 20 is vibrated in the Z2-axis direction during the t11 to t12 period. As the headstock 10 is moved to the +Z1 direction, the lubricant spreads across the raceway groove and the rolling elements in the guide of the headstock 10.
The second control mode may be executed during a t12 to t13 period. The NC apparatus 70 may measure the t12 to t13 period by using the timer circuit 74. The tool post 20 may be moved to the -Z2 direction at a constant speed while the headstock 10 is vibrated in the Z1-axis direction during the t12 to t13 period. As the tool post 20 is moved to the -Z2 direction, the lubricant spreads across the raceway groove and the rolling elements in the guide of the tool post 20. The first control mode may be executed during a t13 to t14 period. The NC apparatus 70 may measure the t13 to t14 period by using the timer circuit 74. The headstock 10 may be moved to the +Z1 direction at a constant speed while the tool post 20 is vibrated in the Z2-axis direction during the t13 to t14 period. As the headstock 10 is moved to the +Z1 direction, the lubricant spreads across the raceway groove and the rolling elements in the guide of the headstock 10.

The second control mode may be then executed.

The first and second control modes may be alternated to cut the workpiece WO to the-Z1 direction while the chips C0 are sequentially segmented.

The headstock 10 may be largely moved in the Z1-axis direction at regular intervals. The lubricant therefore spreads across the raceway groove and the rolling elements at regular intervals in the guide extended in the Z1-axis direction in the headstock 10. The tool post 20 may be largely moved in the Z2-axis direction at regular intervals. The lubricant therefore spreads across the raceway groove and the rolling elements at regular intervals in the guide extended in the Z2-axis direction in the tool post 20. The vibration-cut mode 1 prevents an oil film damage, thereby elongating the life of the guide for use in cutting the workpiece.

The workpiece WO may be cut to the -Z1 direction but not limited thereto. The -Z1 direction may be replaced by the +Z1 direction, the -X1 direction, or the +X1 direction. When the workpiece WO is cut, for example, to the -X1 direction, the headstock 10 and the tool post 20 may be controlled to vibrate their relative positional relation in the X-axis direction. In the first control mode, the headstock 10 may be moved to the +X1 direction while the tool post 20 is vibrated in the X2-axis direction. In the second control mode, the tool post 20 may be moved to the -X2 direction while the headstock 10 is vibrated in the X1-axis direction. The lubricant therefore spreads across the raceway groove and the rolling elements at regular intervals in the guide extended in the X-axis direction, preventing an oil film damage and thereby elongating the life of the guide for use in cutting the workpiece.

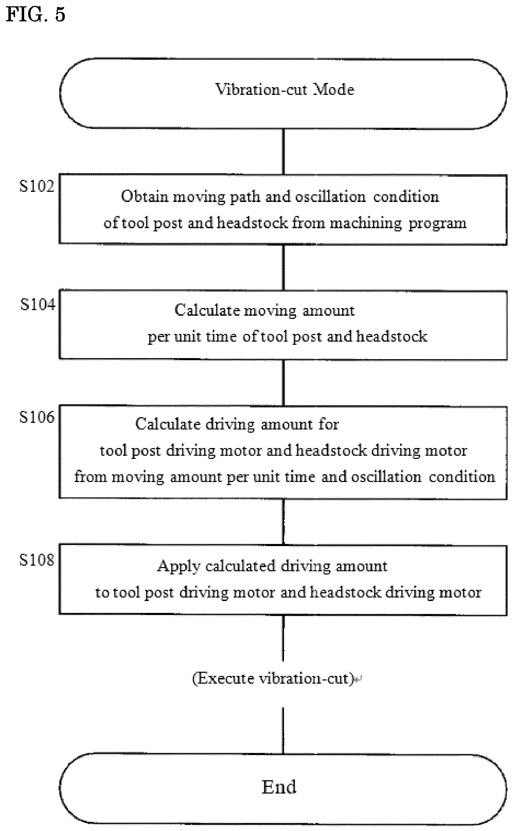

FIG. 5 represents a vibration-cut mode processing executed by the NC apparatus 70. The processing may be started when the NC apparatus 70 reads the command described in the machining program P. A general user cannot readily write a machining program for the vibration-cut mode shown in FIG. 3 and 4. FIG. 5 shows an example of a vibration-cut mode implemented by the NC apparatus 70 executing the interpretive program P1

Upon start of the vibration-cut mode processing, the NC apparatus 70 may obtain a moving path and an oscillation condition of the tool post 20 and the headstock 10 in the vibration-cut mode from among the machining program P2 (Step S102). The moving path may comprise a start position, an end position, and a relative moving amount per spindle rotation. The moving direction of the tool post 20 and the headstock 10 may be obtained from the start position and the end position. The moving direction may comprise the -Z1 direction, the +Z1 direction, the -X1 direction, and the +X1 direction. The oscillation condition may comprise a frequency per spindle rotation (f) and the amplitude (A).

The NC apparatus 70 may then calculate a moving amount per unit time (m) of the tool post 20 and the headstock 10 from the relative moving amount per spindle rotation of the tool post 20 and the headstock 10 (Step S104). The unit time may represent a time for each period of the first and second control modes alternately executed. In FIG. 3 and FIG. 4, the moving amount (m) represents a time for the t11 to t12 period, a time for the t12 to t13 period, and a time for the t13 to t14 period. The moving amount (m) may be, for example, a value determined by multiplying the relative moving amount per spindle rotation by a positive coefficient.

The NC apparatus 70 may then calculate a driving amount for a tool post driving motor and a headstock driving motor from the moving amount per unit time (m) and the oscillation condition (Step S106). When the workpiece WO is cut to the -Z1 direction, in the first control mode, the NC apparatus 70 may calculate the driving amount for the Z1-axis motor M12 and the driving amount for the Z2-axis motor M22. The driving amount for the Z1-axis motor M12 may be determined by the moving amount per unit time (m) representing the moving amount of the headstock 10 to the +Z1 direction. The driving amount for the Z2-axis motor M22 may be determined by the frequency (f) and the amplitude (A) representing the oscillation condition of the tool post 20 in the Z2-axis direction. In the second control mode then, the NC apparatus 70 may calculate the driving amount for the Z2-axis motor M22 and the driving amount for the Z1-axis motor M12. The driving amount for the Z2-axis motor M22 may be determined by the moving amount per unit time (m) representing the moving amount of the tool post 20 to the -Z2 direction. The driving amount for the Z1-axis motor M12 may be determined by the frequency (f) and the amplitude (A) representing the oscillation condition of the headstock 10 in the Z1-axis direction.

The NC apparatus may then apply the calculated driving amounts respectively to the tool post driving motor and the headstock driving motor (Step S108). The tool post driving motor and the headstock driving motor may respectively drive the tool post 20 and the headstock 10 to vibration-cut the workpiece WO as shown in FIG. 3 and FIG. 4. The vibration-cut mode 1 prevents an oil film damage, thereby elongating the life of the guide for use in cutting the workpiece.

(4) Vibration-cut mode 2:

FIG. 6 schematically shows an operation of the headstock 10 and the tool post 20 in the vibration-cut mode 2. FIG. 7 schematically shows the position of the headstock 10 in the Z1-axis direction, the position of the tool post 20 in the Z2-axis direction, and a relative positional relation between the headstock 10 and the tool post 20 in the vibration-cut mode 2. The directions (+X1, -X1, +X2, -X2, +Z1, -Z1, +Z2, -Z2) are common to FIG. 3. **In** FIG. 7, the horizontal axis represents the time (t) while the vertical axis represents the Z-axis position of the headstock 10 and the tool post 20. A curved broken line represents the position of the headstock 10 in the Z1-axis direction with respect to the time (t). A curved solid line represents the position of the tool post 20 in the Z2-axis direction with respect to the time (t). A solid line with a circle represents the relative cutting position of the workpiece WO in the -Z1 direction, which represents a change in relative positions of the headstock 10 and the tool post 20 in the Z-axis direction from the initial relative positions thereof.

**In** the first control mode where the headstock 10 and the tool post 20 are moved to the plus direction in the Z-axis direction, the moving amount (m1) of the headstock 10 in the +Z1 direction and the moving amount (m2) of the tool post 20 in the +Z2 direction are greater than the relative amplitude (A) (A>0) in the Z-axis direction by, for example, 1 (one) order (10 times) or more. The relative amplitude (A) may correspond to the amplitude (A) of the headstock 10 and the tool post 20 as vibrated in FIG. 3 and FIG. 4. **In** the second control mode where the headstock 10 and the tool post 20 are moved to the minus direction in the Z-axis direction, the moving amount (m3) of the headstock 10 in the -Z1 direction and the moving amount (m4) of the tool post 20 in the -Z2 direction are greater than the relative amplitude (A) in the Z-axis direction by, for example, 1 (one) order (10 times) or more. The moving amount (m1, m2, m3, m4) is larger than the amplitude (A). The oscillation angle $2\beta$ of the guide in the headstock 10 and the tool post 20 may be thereby greater than the critical oscillation angle $2\beta c$.

**In** FIG. 6 and FIG. 7, the workpiece WO is cut to the -Z1 direction. The spindle 11 may have started rotating before the t21 timing by the rotation motor M13 under control of the NC apparatus 70. The moving amount per unit time (m0) (m0>0) corresponds to the moving amount per unit time of the tool post 20 relatively moving in the -Z2 direction with respect to the headstock 10 when the relative positional relation between the headstock 10 and the tool post 20 in the Z-axis direction is not vibrated. The unit time may represent a time for a period in which the headstock 10 and the tool post 20 are moved to the plus direction in the Z-axis direction or a time for a period in which the headstock 10 and the tool post 20 are moved to the minus direction in the Z-axis direction.

The first control mode may be executed during a t21 to t22 period. The NC apparatus 70 may measure the t21 to t22 period by using the timer circuit 74. Under the initial conditions satisfying formula "m0<m1-m2≤m0+A", the headstock 10 is moved to the +Z1 direction by the moving amount (m1) and the tool post 20 is moved to the +Z2 direction by the moving amount (m2). As the headstock 10 and the tool post 20 are both moved in the Z-axis direction, the lubricant spreads across the raceway groove and the rolling elements in the guides of the headstock 10 and the tool post 20.

The second control mode may be executed during a t22 to t23 period. The NC apparatus 70 may measure the t22 to t23 period by using the timer circuit 74. Under the conditions satisfying formula "m3-m4=m0-A", the headstock 10 is moved to the -Z1 direction by the moving amount (m3) and the tool post 20 is moved to the -Z2 direction by the moving amount (m4). As the headstock 10 and the tool post 20 are both moved in the Z-axis direction, the lubricant spreads across the raceway groove and the rolling elements in the guides of the headstock 10 and the tool post 20.

The first control mode may be executed during a t23 to t24 period. The NC apparatus 70 may measure the t23 to t24 period by using the timer circuit 74. Under the conditions satisfying formula "m1-m2=m0+A", the headstock 10 is moved to the +Z1 direction by the moving amount (m1) and the tool post 20 is moved to the +Z2 direction by the moving amount (m2). As the headstock 10 and the tool post 20 are both moved in the Z-axis direction, the lubricant spreads across the raceway groove and the rolling elements in the guides of the headstock 10 and the tool post 20.

The second control mode may be executed during a next period. The headstock 10 and the tool post 20 may be moved to the minus direction in the Z-axis direction.

After that, in the first control mode, the headstock 10 and the tool post 20 are moved to the plus direction in the Z1-axis direction under the conditions satisfying formula "m1-m2=m0+A". In the second control mode, the headstock 10 and the tool post 20 are moved to the minus direction in the Z1-axis direction under the conditions satisfying formula "m3-m4=m0-A". The first control mode and the second control mode may be alternated to vary the Z1-axis positions of the headstock 10 and the tool post 20 with respect to the time (t) in the shape of a sine curve (FIG. 7). The relative cutting position of the workpiece WO in the -Z1 direction varies according to a variation in amplitude (A) after every elapse of unit time. Examples of the relative cutting position of the workpiece WO includes "m0+A or less", "2×m0-A", "3×m0+A", and "4×m0-A". The position immediately after the first control mode may be obtained by multiplying the relative moving amount (m0) by an odd number and then adding the amplitude (A). The position immediately after the second control mode may be obtained by multiplying the relative moving amount (m0) by an even number and then taking the amplitude (A). A virtual oscillation of the amplitude (A) is added to the relative cutting position of the workpiece WO in the -Z1 direction, allowing the chips C0 to be sequentially segmented without applying small amplitude oscillations to the headstock 10 and the tool post 20.

As described above, the relative positional relation between the headstock 10 and the tool post 20 can be virtually vibrated in the Z-axis direction under control of the NC apparatus 70 in synchronization with the alternately executed control modes. The workpiece WO can be cut to the -Z1 direction, during which the chips C0 can be sequentially segmented.

The headstock 10 and the tool post 20 may be largely moved in the Z-axis direction without repeated small amplitude oscillations. The lubricant therefore spreads across the raceway groove and the rolling elements in the guides extended in the Z-axis direction in the headstock 10 and the tool post 20. The vibration-cut mode 2 prevents an oil film damage, thereby elongating the life of the guide used in cutting the workpiece.

In the first control mode, the headstock 10 and the tool post 20 may be moved to the plus direction in the Z-axis direction under the conditions satisfying formula "m1-m2=m0-A" instead of "m1-m2=m0+A". In the second control mode accordingly, the headstock 10 and the tool post 20 may be moved to the minus direction in the Z-axis direction under the conditions satisfying formula "m3-m4=m0+A" instead of "m3-m4=m0-A". The relative positional relation between the headstock 10 and the tool post 20 may be thereby virtually vibrated to allow the chips C0 to be sequentially segmented while preventing an oil film damage.

The workpiece WO may be cut to the -Z1 direction but not limited thereto. The -Z1 direction may be replaced by the +Z1 direction, the -X1 direction, or the +X1 direction. When the workpiece WO is cut to, for example, the -X1 direction, the X-axis direction may correspond to the direction of a predetermined orientation. The NC apparatus 70 may control the operation of the headstock 10 and the tool post 20 enough to vibrate the relative positional relation between the headstock 10 and the tool post 20 in the X-axis direction. In the first control mode, the headstock 10 and the tool post 20 may be moved to the plus direction in the X-axis direction under the conditions satisfying formula "m1-m2=m0+A". In the second control mode, the headstock 10 and the tool post 20 may be moved to the minus direction in the X-axis direction under the conditions satisfying formula "m3-m4=m0-A". The lubricant therefore spreads across the raceway groove and the rolling elements in the guides extended in the X-axis direction in the headstock 10 and the tool post 20. The vibration-cut mode 2 prevents an oil film damage, thereby elongating the life of the guide used in cutting the workpiece.

The vibration-cut processing in FIG. 5 may be also applied to the vibration-cut mode 2. The Step S102 to S104 may be similarly executed. The driving amount calculated in Step S106 may be determined to allow the tool post 20 and the headstock 10 to be moved to the plus direction in the driving direction in the first mode and to allow the tool post 20 and the headstock to be moved to the minus direction in the driving direction in the second mode.

It is being assumed that the workpiece WO is cut to the -Z1 direction for explanation. In the first control mode, the driving amount for the Z2-axis motor M22 may be determined by the moving amount per unit time (m2) representing the moving amount of the tool post 20 to the +Z2 direction under the conditions satisfying formula "m1-m2=m0+A". The driving amount for the Z1-axis motor M12 may be determined by the moving amount per unit time (m1) representing the moving amount of the headstock 10 to the +Z1 direction under the same conditions. In the second control mode, the driving amount for the Z2-axis motor M22 may be determined by the moving amount per unit time (m4) representing the moving amount of the tool post 20 to the -Z2 direction under the conditions satisfying formula "m3-m4=m0-A". The driving amount for the Z1-axis motor M12 may be determined by the moving amount per unit time (m3) representing the moving amount of the headstock 10 to the -Z1 direction under the same conditions.

The NC apparatus may then apply the calculated driving amounts respectively to the tool post driving motor and the headstock driving motor (Step S108). The tool post driving motor and the headstock driving motor may respectively drive the tool post 20 and the headstock 10 to vibration-cut the workpiece WO as shown in FIG. 6 and FIG. 7. The vibration-cut mode 2 prevents an oil film damage, thereby elongating the life of the guide used in cutting the workpiece.

(5) Modifications:

The invention may be embodied in a variety of modifications. The lathe, for example, may comprise a lathe of sliding headstock type and a lathe of stationary headstock type. The driving direction may be the Y-axis direction if the headstock and the tool post are both movable in the Y-axis direction.

(6) Conclusion:

As described above, the invention provides a lathe capable of elongating the life of the guide for use in cutting the workpiece in a variety of embodiments. The essential operations and effects of the invention may be available even from only the elements of independent claims. The elements disclosed in the embodiments may be mutually replaced or the combination thereof may be changed.

**DESCRPTION OF SYMBOLS**

1      lathe
2      bed
10     headstock

| 20 | tool post |
| 70 | NC apparatus |
| AX0 | spindle axis |
| T0 | tool |
| TU0 | tool unit |
| U1 | first driving unit |
| U2 | second driving unit |
| U3 | control unit |
| WO | workpiece |

**Claims**

1. A lathe (1) comprising:

   a headstock (10) provided with a spindle (11) configured to hold a workpiece (W0), a tool post (20) which holds a tool (T0) configured to cut the workpiece (W0),
   a first driving unit (U1) configured to move the headstock (10) in a driving direction of a predetermined orientation,
   a second driving unit (U2) configured to move the tool post (20) in the driving direction, and
   a control unit (U3) configured to vibrate a relative positional relation between the headstock (10) and the tool post (20) in the driving direction when the headstock (10) and the tool post (20) are relatively moved in the driving direction to cut the workpiece (W0),
   **characterized in that** the control unit (U3) is further configured to alternately execute a first control mode in which the headstock (10) is moved while the tool post (20) is vibrated in the driving direction and a second control mode in which the tool post (20) is moved while the headstock (10) is vibrated in the driving direction.

2. A lathe (1) comprising:

   a headstock (10) provided with a spindle (11) configured to hold a workpiece (W0), a tool post (20) which holds a tool (T0) configured to cut the workpiece (W0),
   a first driving unit (U1) configured to move the headstock (10) in a driving direction of a predetermined orientation,
   a second driving unit (U2) configured to move the tool post (20) in the driving direction, and
   a control unit (U3) configured to vibrate a relative positional relation between the headstock (10) and the tool post (20) in the driving direction when the headstock (10) and the tool post (20) are relatively moved in the driving direction to cut the workpiece (W0),
   **characterized in that** the control unit (U3) is further configured to alternately execute a first control mode in which the headstock (10) and the tool post (20) are moved to a plus direction in the driving direction and a second control mode in which the headstock (10) and the tool post (20) are moved to a minus direction in the driving direction, and
   wherein the control unit (U3) is configured to change a relative moving amount between the headstock (10) and the tool post (20) in the driving direction during the alternate executions of the first control mode and the second control mode, the relative moving amount increases in the first control mode with a first amount and decreases in the second control mode with a second amount smaller than the first amount,
   wherein the headstock (10) and the tool post (20) are moved in the first control mode under conditions satisfying the formula $m1-m2=m0\pm A$ and in the second control mode under conditions satisfying the formula $m3-m4=m0 \mp A$, in which m0 is a moving amount per unit time of the tool post (20) relatively moving in the negative driving direction with respect to the headstock (10) when the relative positional relation between the headstock (10) and the tool post (20) in the driving direction is not vibrated, m0 being larger than 0,
   m1 is a moving amount per unit time in the plus driving direction of the headstock (10), m2 is a moving amount per unit time in the plus driving the tool post (20), m3 is a moving amount per unit time in the negative driving direction of the headstock (10), m4 is a moving amount per unit time in the negative driving direction of the tool post (20), and
   A is a relative vibration amplitude of the headstock (10) and the tool post (20) in the driving direction, the respective moving amounts m1, m2, m3, m4 being larger than the amplitude A and A being larger than 0.

**Patentansprüche**

1. Drehmaschine (1), umfassend:

einen Spindelstock (10), der mit einer Spindel (11) versehen ist, die ausgestaltet ist, um ein Werkstück (W0) zu halten,

einen Werkzeughalter (20), der ein Werkzeug (T0) hält, das ausgestaltet ist,

um das Werkstück (W0) zu schneiden,

eine erste Antriebseinheit (U1), die ausgestaltet ist, um den Spindelstock (10) in einer Antriebsrichtung einer vorbestimmten Ausrichtung zu bewegen,

eine zweite Antriebseinheit (U2), die ausgestaltet ist, um den Werkzeughalter (20) in der Antriebsrichtung zu bewegen, und

eine Steuereinheit (U3), die ausgestaltet ist, um eine relative Positionsbeziehung zwischen dem Spindelstock (10) und dem Werkzeughalter (20) in der Antriebsrichtung zu vibrieren, wenn der Spindelstock (10) und der Werkzeughalter (20) relativ in der Antriebsrichtung bewegt werden, um das Werkstück (W0) zu schneiden, **dadurch gekennzeichnet, dass** die Steuereinheit (U3) ferner ausgestaltet ist,

um abwechselnd einen ersten Steuermodus, in dem der Spindelstock (10) bewegt wird, während der Werkzeughalter (20) in der Antriebsrichtung vibriert wird, und einen zweiten Steuermodus, in dem der Werkzeughalter (20) bewegt wird, während der Spindelstock (10) in der Antriebsrichtung vibriert wird, auszuführen.

2. Drehmaschine (1), umfassend:

einen Spindelstock (10), der mit einer Spindel (11) versehen ist, die ausgestaltet ist, um ein Werkstück (W0) zu halten,

einen Werkzeughalter (20), der ein Werkzeug (T0) hält, das ausgestaltet ist,

um das Werkstück (W0) zu schneiden,

eine erste Antriebseinheit (U1), die ausgestaltet ist, um den Spindelstock (10) in einer Antriebsrichtung einer vorbestimmten Ausrichtung zu bewegen,

eine zweite Antriebseinheit (U2), die ausgestaltet ist, um den Werkzeughalter (20) in der Antriebsrichtung zu bewegen, und

eine Steuereinheit (U3), die ausgestaltet ist, um eine relative Positionsbeziehung zwischen dem Spindelstock (10) und dem Werkzeughalter (20) in der Antriebsrichtung zu vibrieren, wenn der Spindelstock (10) und der Werkzeughalter (20) relativ in der Antriebsrichtung bewegt werden, um das Werkstück (W0) zu schneiden, **dadurch gekennzeichnet, dass** die Steuereinheit (U3) ferner ausgestaltet ist,

um abwechselnd einen ersten Steuermodus, in dem der Spindelstock (10) und der Werkzeughalter (20) in einer Plusrichtung in der Antriebsrichtung bewegt werden, und einen zweiten Steuermodus, in dem der Spindelstock (10) und der Werkzeughalter (20) in einer Minusrichtung in der Antriebsrichtung bewegt werden, auszuführen, und

wobei die Steuereinheit (U3) ausgestaltet ist, um einen relativen Bewegungsbetrag zwischen dem Spindelstock (10) und dem Werkzeughalter (20) in der Antriebsrichtung während der abwechselnden Ausführungen des ersten Steuermodus und des zweiten Steuermodus zu ändern, wobei der relative Bewegungsbetrag in dem ersten Steuermodus mit einem ersten Betrag zunimmt und in dem zweiten Steuermodus mit einem zweiten Betrag, der kleiner als der erste Betrag ist, abnimmt,

wobei der Spindelstock (10) und der Werkzeughalter (20) in dem ersten Steuermodus unter Bedingungen, die die Formel $m1-m2=m0\pm A$ erfüllen, und in dem zweiten Steuermodus unter Bedingungen, die die Formel $m3-m4=m0\mp FA$ erfüllen, bewegt werden, wobei

m0 ein Bewegungsbetrag pro Zeiteinheit des Werkzeughalters (20) ist, der sich relativ in der negativen Antriebsrichtung in Bezug auf den Spindelstock (10) bewegt, wenn die relative Positionsbeziehung zwischen dem Spindelstock (10) und dem Werkzeughalter (20) in der Antriebsrichtung nicht vibriert wird, wobei m0 größer als 0 ist,

m1 ein Bewegungsbetrag pro Zeiteinheit in der Plusantriebsrichtung des Spindelstocks (10) ist, m2 ein Bewegungsbetrag pro Zeiteinheit in dem Plusantrieb des Werkzeughalters (20) ist, m3 ein Bewegungsbetrag pro Zeiteinheit in der negativen Antriebsrichtung des Spindelstocks (10) ist, m4 ein Bewegungsbetrag pro Zeiteinheit in der negativen Antriebsrichtung des Werkzeughalters (20) ist, und

A eine relative Vibrationsamplitude des Spindelstocks (10) und des Werkzeughalters (20) in der Antriebsrichtung ist, wobei die jeweiligen Bewegungsbeträge m1, m2, m3, m4 größer als die Amplitude A sind und A größer als 0 ist.

**Revendications**

1. Tour (1) comprenant :

une poupée fixe (10) munie d'une broche (11) configurée pour tenir une pièce à œuvrer (W0),

un porte-outil (20) qui tient un outil (T0) configuré pour couper la pièce à œuvrer (W0),

une première unité d'entraînement (U1) configurée pour déplacer la poupée fixe (10) dans une direction d'entraînement d'une orientation prédéterminée,

une deuxième unité d'entraînement (U2) configurée pour déplacer le porte-outil (20) dans la direction d'entraînement, et

une unité de commande (U3) configurée pour mettre en vibration une relation de position relative entre la poupée fixe (10) et le porte-outil (20) dans la direction d'entraînement quand la poupée fixe (10) et le porte-outil (20) sont déplacés relativement dans la direction d'entraînement pour couper la pièce à œuvrer (W0),

**caractérisé en ce que** l'unité de commande (U3) est en outre configurée pour exécuter en alternance un premier mode de commande dans lequel la poupée fixe (10) est déplacée tandis que le porte-outil (20) est mis en vibration dans la direction d'entraînement, et un deuxième mode de commande dans lequel le porte-outil (20) est déplacé tandis que la poupée fixe (10) est mise en vibration dans la direction d'entraînement.

2. Tour (1) comprenant :

une poupée fixe (10) munie d'une broche (11) configurée pour tenir une pièce à œuvrer (W0),

un porte-outil (20) qui tient un outil (T0) configuré pour couper la pièce à œuvrer (W0),

une première unité d'entraînement (U1) configurée pour déplacer la poupée fixe (10) dans une direction d'entraînement d'une orientation prédéterminée, une deuxième unité d'entraînement (U2) configurée pour déplacer le porte-outil (20) dans la direction d'entraînement, et

une unité de commande (U3) configurée pour mettre en vibration une relation de position relative entre la poupée fixe (10) et le porte-outil (20) dans la direction d'entraînement quand la poupée fixe (10) et le porte-outil (20) sont déplacés relativement dans la direction d'entraînement pour couper la pièce à œuvrer (W0),

**caractérisé en ce que** l'unité de commande (U3) est en outre configurée pour exécuter en alternance un premier mode de commande dans lequel la poupée fixe (10) et le porte-outil (20) sont déplacés vers une direction positive dans la direction d'entraînement, et un deuxième mode de commande dans lequel la poupée fixe (10) et le porte-outil (20) sont déplacés vers une position négative dans la direction d'entraînement, et

dans lequel l'unité de commande (U3) est configurée pour changer une amplitude de déplacement relatif entre la poupée fixe (10) et le porte-outil (20) dans la direction d'entraînement pendant les exécutions alternées du premier mode de commande et du deuxième mode de commande, l'amplitude de déplacement relatif augmentant dans le premier mode de commande avec une première amplitude et diminuant dans le deuxième mode de commande avec une deuxième amplitude inférieure à la première amplitude,

dans lequel la poupée fixe (10) et le porte-outil (20) sont déplacés dans le premier mode de commande dans des conditions satisfaisant à la formule $m1-m2=m0\pm A$ et dans le deuxième mode de commande dans des conditions satisfaisant à la formule $m3-m4=m0\pm A$, où

m0 est une amplitude de déplacement par temps unitaire du porte-outil (20) se déplaçant relativement dans la direction d'entraînement négative par rapport à la poupée fixe (10) quand la relation de position relative entre la poupée fixe (10) et le porte-outil (20) dans la direction d'entraînement n'est pas mise en vibration, m0 étant supérieure à 0,

m1 est une amplitude de déplacement par temps unitaire dans la direction d'entraînement positive de la poupée fixe (10), m2 est une amplitude de déplacement par temps unitaire dans la direction d'entraînement positive du porte-outil (20), m3 est une amplitude de déplacement par temps unitaire dans la direction d'entraînement négative de la poupée fixe (10), m4 est une amplitude de déplacement par temps unitaire dans la direction d'entraînement négative du porte-outil (20), et

A est une amplitude de vibration relative de la poupée fixe (10) et du porte-outil (20) dans la direction d'entraînement, les amplitudes de déplacement respectives m1, m2, m3, m4 étant supérieures à l'amplitude A et A étant supérieure à 0.

FIG. 1

FIG. 2

NC apparatus 70
(Control Unit U3)

Timer Circuit 74

CPU 71

ROM 72

Interpretive
Program P1

RAM 73

Machining
Program P2

I/F 75

Operation Panel 80

Input 81          Display 82

X1-axis motor M11

Z1-axis motor M12

Rotation Motor M13

Headstock
10

Spindle
11

X2-axis motor M21

Z2-axis motor M22

Tool Post
20

FIG. 3

FIG. 4

FIG. 5

```
┌─────────────────────────────────────────────┐
│              Vibration-cut Mode              │
└─────────────────────────────────────────────┘
                       │
┌──────┬──────────────────────────────────────┐
│ S102 │  Obtain moving path and oscillation   │
│      │  condition of tool post and headstock │
│      │       from machining program          │
└──────┴──────────────────────────────────────┘
                       │
┌──────┬──────────────────────────────────────┐
│ S104 │        Calculate moving amount        │
│      │  per unit time of tool post and       │
│      │              headstock                │
└──────┴──────────────────────────────────────┘
                       │
┌──────┬──────────────────────────────────────┐
│ S106 │       Calculate driving amount for    │
│      │  tool post driving motor and          │
│      │  headstock driving motor from moving  │
│      │  amount per unit time and oscillation │
│      │              condition                │
└──────┴──────────────────────────────────────┘
                       │
┌──────┬──────────────────────────────────────┐
│ S108 │       Apply calculated driving amount │
│      │  to tool post driving motor and       │
│      │       headstock driving motor         │
└──────┴──────────────────────────────────────┘
                       │
              (Execute vibration-cut)
                       │
┌─────────────────────────────────────────────┐
│                     End                      │
└─────────────────────────────────────────────┘
```

FIG. 6

## FIG. 7

Legend:
— Z2-axis position of tool post
--- Z1-axis position of headstock
—○— Relative Moving Amount

$\leqq m0+A$  $3m0+A$  $5m0+A$

$2m0-A$  $4m0-A$  $6m0-A$  $\cdots$

$t$

## FIG. 8

B0

B1

B3

B4

B2

**EP 3 733 328 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3213438 U

- WO 2015146945 A1